# FASCICULE DE BREVET EUROPEEN

(11) **EP 2 642 464 B1**
(45) Date de publication et mention de la délivrance du brevet: **09.01.2019**
(21) Numéro de dépôt: 13160358.1
(22) Date de dépôt: 21.03.2013
(51) Int. Cl.: G08G 1/16

(54) **Procédé de détermination d'information**
Verfahren zur Informationsbestimmung
Method for determining information

(30) Priorité: 23.03.2012 FR 1252637
(43) Date de publication de la demande: 25.09.2013
(73) Titulaire: Institut Français des Sciences et Technologies des Transports, de l'Aménagement et des Réseaux, 77420 Champs sur Marne (FR)
(72) Inventeur: Orfila, Olivier, 78530 Buc (FR); Gruyer, Dominique, 78650 Beynes (FR); Glaser, Sébastien, 78330 Fontenay le Fleury (FR)
(74) Mandataire: Duflos, Bertrand Guillaume

(56) Documents cités:
- DE-A1-102010 033 776
- DE-A1-102010 044 631
- DE-A1-102012 203 187

## Description

L'invention concerne tout d'abord un procédé de détermination d'une information relative à une trajectoire envisagée pour un véhicule routier, susceptible d'être utile pour la conduite du véhicule.

De manière habituelle, les procédés de ce type sont mis en oeuvre en générant un nombre élevé de trajectoires envisagées pour le véhicule, en comparant les avantages et conséquences respectifs au cas où le véhicule suit ces trajectoires, et en déduisant en conclusion les informations cherchées. Cette méthode a l'inconvénient d'être fortement consommatrice en temps de calcul.

Un procédé analogue de détermination de trajectoires est par exemple présenté par le document DE 10 2012 203 187 A1.

Par suite, un premier objectif de l'invention est de proposer un procédé de détermination d'information du type présenté ci-dessus, apte à fournir des informations utiles pour la conduite du véhicule, et cela dans un temps de calcul très limité.

Cet objectif est atteint grâce au fait que le procédé de détermination d'une information relative à une trajectoire envisagée pour le véhicule routier, comprend les étapes suivantes :
a) on détermine au moins deux trajectoires possibles pour le véhicule, dites trajectoires de référence ;
b) on détermine un profil cinématique de référence, pour le parcours de chacune des trajectoires de référence ;
c) on détermine une tranche temporelle de véhicule (CA) correspondant à un instant (t0+kΔt), en interpolant des points atteints à cet instant sur lesdites trajectoires de référence, parcourues suivant leurs profils cinématiques de référence respectifs, une tranche temporelle de véhicule étant l'ensemble des points susceptibles d'être atteints par le véhicule à un instant (t0+kΔt) considéré ; et
e) au moyen de ladite tranche temporelle, on détermine une information relative à la trajectoire envisagée en fonction des trajectoires de référence, la trajectoire envisagée étant une trajectoire intermédiaire passant entre les trajectoires de référence en fonction des trajectoires de référence.

Les trajectoires de référence peuvent notamment être les trajectoires extrêmes possibles pour le véhicule, à savoir la frontière de l'ensemble des trajectoires possibles. Avantageusement, la ou les trajectoires intermédiaires ne sont pas calculées (ou du moins pas nécessairement), ce qui fait que le procédé nécessite un faible temps de calcul. L'information recherchée peut être calculée sur la base des trajectoires de référence grâce à la propriété d'homotopie des différentes trajectoires.

Dans la définition précédente et plus généralement, dans le présent document :
- les trajectoires des objets mobiles ainsi que du véhicule équipé de la présente invention sont déterminées dans un espace bidimensionnel ou de préférence tridimensionnel, aussi représentatif que possible de l'environnement du véhicule. De préférence, les trajectoires sont définies par rapport au repère terrestre (ou par rapport au sol), plutôt que dans le référentiel propre du véhicule.
- des trajectoires possibles sont des trajectoires que le véhicule peut suivre compte tenu d'une part de ses caractéristiques intrinsèques (capacité d'accélération, rayon de braquage minimal, etc.), et d'autre part de certaines caractéristiques retenues pour le conducteur (accélération ou décélération maximale acceptée, etc.).
- L'expression 'est apte à' est synonyme de 'comprend des moyens pour'.
- Par trajectoire (ou trace), on désigne une courbe dans l'espace, que le véhicule ou l'objet mobile peut parcourir. La trajectoire est définie indépendamment de la vitesse à laquelle elle est parcourue.
- Inversement, le profil cinématique est le vecteur constitué par la position, la vitesse et l'accélération de l'élément considéré, exprimées en fonction du temps. Le profil cinématique définit donc le rythme de parcours de la trajectoire par l'élément considéré. En pratique, il peut être défini par les variations en fonction du temps d'une seule 'première variable', qui peut être la position, la vitesse ou l'accélération de l'élément considéré, parcourant la trajectoire considérée ; les deux autres variables pouvant se déduire par dérivation ou intégration de la première. Le profil cinématique prend en compte de préférence les six degrés de liberté de l'élément considéré. Il peut également ne prendre en compte qu'une partie de ces degrés de liberté, notamment deux translations dans le plan horizontal et le taux de lacet.
- La probabilité d'un profil cinématique est la probabilité que le véhicule ou l'objet mobile parcoure la trajectoire à laquelle correspond le profil cinématique suivant le profil cinématique considéré.

Les différents perfectionnements suivants peuvent être apportés au procédé, seuls ou en combinaison :
- à l'étape e), l'information relative à une trajectoire intermédiaire peut être déterminée comme fonction de la position d'au moins un point de la trajectoire intermédiaire par rapport aux trajectoires de référence.
- le procédé peut comprendre en outre une étape d) :
   d) on détermine une probabilité pour le véhicule de passer par un point de la tranche temporelle de véhicule comme une fonction de la position dudit point sur la tranche temporelle de véhicule.
- le procédé peut alors comprendre en outre les étapes suivantes :
   a2) on détermine, pour un objet mobile par rapport au véhicule, au moins deux trajectoires de référence d'objet ;
   b2) on détermine un profil cinématique de référence, pour le parcours de chacune des trajectoires de référence d'objet ;
   c2) on détermine une tranche temporelle d'objet correspondant audit instant (t0+kΔt), en interpolant des points atteints à cet instant sur lesdites trajectoires de référence d'objet, parcourues suivant leurs profils cinématiques de référence respectifs ;
   d2) on détermine une probabilité pour l'objet de passer par un point de la tranche temporelle d'objet comme une fonction de la position dudit point sur la tranche temporelle d'objet ; et en outre,
   à l'étape e), ladite information est une probabilité de collision entre le véhicule et l'objet, à un point d'intersection des tranches temporelles de véhicule et d'objet s'il existe ; et
   ladite probabilité de collision est égale au produit des probabilité du véhicule et de l'objet de passer audit point d'intersection audit instant.

Avantageusement, le procédé selon l'invention peut être utilisé pour évaluer l'intérêt relatif et la possibilité d'adopter différentes trajectoires (et des profils cinématiques associés).

Il peut aussi être utilisé pour faciliter l'insertion du véhicule dans le trafic ou du moins, pour faciliter la prise de décision, pour le conducteur du véhicule, de s'insérer dans le trafic ou sur une intersection ou plus généralement, de suivre une trajectoire donnée. (Le terme 'conducteur du véhicule' désigne ici de manière large un conducteur humain, un système automatisé de conduite du véhicule, etc.).

Pour mettre en oeuvre le procédé dans ce but, les étapes a) à d) et a2) à d2) sont réalisées pour une suite d'instants postérieurs à l'instant considéré ; et le procédé comporte en outre les étapes suivantes :
f) pour une trajectoire et un profil cinématique envisagés pour le véhicule, ou parmi toutes les collisions envisagées pour le véhicule, on détermine le point probable de collision, pour lequel la probabilité de collision est maximale ; et
g) on détermine la trajectoire et le profil cinématique associé, pour ledit objet mobile, dits 'd'évitement' qui permettent que l'objet mobile évite la collision tout en atteignant une valeur limite prédéterminée, dite de 'pré-accident' (par exemple, en passant ou en s'arrêtant à une distance minimale entre le mobile et le véhicule ;
h) on réalise une comparaison pour déterminer si la trajectoire et le profil cinématique d'évitement satisfont ou non à un critère d'acceptabilité prédéterminé pour l'objet mobile (ou 'le mobile').

L'invention concerne également un programme d'ordinateur comportant des instructions pour l'exécution des étapes du procédé présenté précédemment, lorsque ledit programme est exécuté par un ordinateur, et un support d'enregistrement lisible par un ordinateur, et sur lequel est enregistré un programme d'ordinateur comprenant des instructions pour l'exécution des étapes du procédé présenté précédemment.

L'invention concerne ensuite un système d'assistance pour véhicule routier. Ce système comprend un dispositif d'identification et de localisation d'objets mobiles, apte à identifier un objet mobile par rapport au véhicule et à estimer au moins une position de celui-ci par rapport au véhicule.

Il comporte en outre une unité de calcul apte à mettre en oeuvre le procédé défini précédemment.

Bien qu'un seul objet mobile soit mentionné, il faut naturellement comprendre que les moyens d'identification et de localisation sont aptes à détecter plusieurs objets mobiles proches du véhicule et d'estimer leurs positions, et que par ailleurs les traitements effectués par l'unité de calcul sont réalisés pour chacun de ces objets mobiles.

La mise en oeuvre du procédé défini précédemment par l'unité de calcul permet au système d'assistance de fournir au conducteur du véhicule des informations utiles à la conduite, sans que l'unité de calcul ne consomme une puissance de calcul importante.

Une application particulièrement intéressante de tels systèmes concerne un système d'assistance à la traversée d'intersections.

Un tel système vise à améliorer la sécurité de déplacement du véhicule en fournissant des informations, et le cas échéant en déclenchant des alarmes ou des actions, lorsqu'un risque de collision avec un objet mobile a été détecté. L'objet mobile peut être un piéton, un cavalier, un autre véhicule, etc.

Un tel système a vocation à être utilisé lorsque le véhicule traverse une intersection, mais peut être utilisé en toutes circonstances.

Dans un domaine voisin, il existe des systèmes d'assistance au stationnement, pour l'assistance au stationnement en marche arrière. Ces systèmes comportent des capteurs aptes à détecter des obstacles à l'arrière du véhicule. Sur la base de ces informations, ces systèmes apportent des informations au conducteur pour l'aider notamment à quitter une place de stationnement en marche arrière.

Cependant, ces systèmes ne détectent pas toujours l'ensemble des risques de collision, et tendent à surestimer certains risques de collision. Par suite, ces systèmes peuvent s'avérer inutilisables en tant que systèmes d'assistance à la traversée d'intersections.

Aussi, l'invention inclut également un système d'assistance pour véhicule routier, comprenant un dispositif d'identification et de localisation d'objets mobiles, apte à identifier un objet mobile par rapport au véhicule et à estimer au moins une position de celui-ci par rapport au véhicule, système qui soit susceptible de permettre une détermination efficace des risques de collision avec le ou les objets mobiles identifiés et ainsi, d'apporter une assistance efficace à la conduite notamment lors de la traversée d'intersections.

Ce système d'assistance comprend un dispositif d'identification et de localisation d'objets mobiles, apte à identifier un objet mobile par rapport au véhicule et à estimer au moins une position de celui-ci par rapport au véhicule, et une unité de calcul.

L'unité de calcul est apte à déterminer pour chaque élément parmi le véhicule et l'objet mobile :
- un faisceau de trajectoires possibles pour l'élément, que l'élément est susceptible de parcourir pendant une période future,
- des profils cinématiques possibles pour l'élément pendant un déplacement de celui-ci sur une ou des trajectoires dudit faisceau de trajectoires, et
- une probabilité desdits profils cinématiques.

De plus, sur la base des faisceaux de trajectoires et des profils cinématiques de l'objet mobile et du véhicule, ainsi que des probabilités desdits profils, l'unité de calcul est apte à déterminer une probabilité de collision entre l'objet mobile et le véhicule.

Cette probabilité peut notamment être quantifiée dans l'espace et dans le temps. La gravité de la collision peut également être estimée en même temps à partir des vitesses prévisionnelles du véhicule et de l'élément mobile concerné au moment de la collision envisagée, ce qui permet ensuite d'évaluer directement le risque de collision entre le véhicule et l'objet mobile.

Dans l'un quelconque des systèmes d'assistance définis précédemment, un ou plusieurs des différents perfectionnements suivants peuvent être envisagés.

Les probabilités des trajectoires et/ou des profils cinématiques peuvent être fonction d'au moins une valeur prédéterminée enregistrée dans une mémoire de l'unité de calcul. L'unité de calcul peut par exemple affecter une probabilité aux différents profils cinématiques et aux différentes trajectoires, en fonction notamment des accélérations que ceux-ci impliquent, par comparaison avec une ou des valeurs de référence prédéterminée(s).

Cette ou ces valeur(s) prédéterminée(s) peut ou peuvent notamment être une valeur d'accélération tangentielle et/ou transverse, et/ou de variation de taux de lacet, ayant en particulier une valeur représentative des comportements habituels ou de préférence du véhicule ou d'objets mobiles. L'accélération tangentielle correspond notamment à la décélération que subit le véhicule lors du freinage, ou encore à son accélération. L'accélération transverse est l'accélération sensiblement horizontale normale à la direction du véhicule, et correspond à l'accélération ressentie dans un virage. Elle est fonction de la vitesse et de la position angulaire des roues avant.

L'unité de calcul peut être apte à déterminer pour le véhicule et l'objet les trajectoires de référence en prenant en compte un modèle géométrique de la chaussée sur laquelle se trouve le véhicule.

Le système d'assistance selon l'invention peut être installé à bord d'un véhicule. Dans un autre mode de réalisation, il peut être implanté sur une intersection afin d'améliorer la sécurité de celle-ci.

Pour une trajectoire considérée (de référence ou non), l'unité de calcul peut être apte à déterminer plusieurs profils cinématiques correspondant à différents critères. Elle peut ainsi déterminer :
- un profil de probabilité maximale. L'unité de calcul détermine alors un couple trajectoire/profil cinématique non seulement possible, mais de plus apparaissant comme le plus probable, par exemple en faisant l'hypothèse d'accélérations minimales, de rayons de courbure constants, etc.
- des profils cinématiques limite, respectivement 'rapide' et 'lent', qui correspond à des vitesses de parcours de la trajectoire respectivement les plus élevées possibles ou les plus faibles possibles (jusqu'à éventuellement l'arrêt). Ces profils limite prennent en compte par exemple des accélérations ou décélérations maximales que peut subir le véhicule ou l'objet mobile, et/ou des vitesses minimales ou maximales autorisées.

Les profils cinématiques envisagés peuvent être déterminés suivant des critères de minimisation (par exemple, minimisation des accélérations), et/ou des critères simplement de respect de certains seuils ou limites (vitesse inférieure à 50 km/h, accélération transverse inférieure à XX m/s², etc.).

Différentes dispositions peuvent être prévues pour déterminer les faisceaux de trajectoires et les profils cinématiques.

Dans un mode de réalisation, pour déterminer les trajectoires de référence et/ou les profils cinématiques de référence, l'unité de calcul est apte à prendre en compte une accélération tangentielle et/ou angulaire de l'objet mobile et/ou du véhicule qui varie en fonction du temps (pendant la période future envisagée).

Ces degrés de liberté permettent de prendre en compte les déplacements possibles du véhicule et/ou de l'objet mobile de manière réaliste.

En particulier, lorsqu'une accélération qui varie en fonction du temps est prise en compte, l'unité de calcul prend en compte une accélération du véhicule et/ou de l'objet mobile différente de celle que celui-ci subit lorsque la position du volant et la vitesse restent constantes (ni le volant, ni l'accélérateur ni les freins n'étant actionnés).

Par suite, l'unité de calcul est apte à prendre en compte une accélération du véhicule autre que l'accélération subie en parcourant une trajectoire circulaire à vitesse constante ; et de même, elle est apte à prendre en compte une accélération de l'objet mobile qui ne se limite pas à l'accélération subie en parcourant une trajectoire circulaire à vitesse constante, y compris en superposant éventuellement à cette accélération, une décélération et/ou un taux de lacet différant du taux de lacet à l'instant considéré d'une valeur fixe prédéfinie.

Par ailleurs, la qualité des informations produites par le système d'assistance selon l'invention est d'autant plus grande que le système dispose de plus d'informations pour évaluer le risque de collisions.

Une première information importante pour le système est l'accélération subie par le ou les objets mobiles. Cette donnée peut être mesurée et/ou calculée.

Dans un mode de réalisation, le dispositif d'identification et de localisation d'objets mobiles est apte à mesurer une accélération d'un objet mobile, qui peut alors être exploitée notamment pour définir le profil cinématique.

Si cette information n'est pas mesurée, l'unité de calcul peut être apte à la calculer à partir des informations de position ou de vitesse fournies par le dispositif d'identification et de localisation.

De plus, de préférence le système comporte un dispositif qui fournit la vitesse du véhicule par rapport au sol. L'unité de calcul et/ou le dispositif d'identification et de localisation peut être apte à exploiter cette information pour distinguer des informations relatives à l'objet mobile d'informations relatives à l'environnement fixe du véhicule.

De préférence, l'unité de calcul comporte une mémoire pour stocker des informations historiques concernant des positions, vitesses et/ou accélérations, du véhicule et/ou de l'objet mobile, relatives à une période passée, présente et/ou future, et l'unité de calcul est apte à utiliser certaines de ces informations historiques pour déterminer le faisceau de trajectoires, et/ou les profils cinématiques. En pratique en général, à l'exception de données trop anciennes, toutes les informations relatives aux positions passées et aux positions futures précédemment estimées, sont enregistrées et disponibles pour l'unité de calcul.

De préférence, l'unité de calcul peut avoir recours à un modèle géométrique de l'intersection pour établir les trajectoires et les profils cinématiques. Ainsi dans un mode de réalisation, l'unité de calcul est apte à établir le modèle géométrique de l'intersection située sur la trajectoire du véhicule. Cette intersection est celle à laquelle arrive le véhicule au moment où le système d'assistance est mis en oeuvre. L'obtention d'un modèle géométrique de l'intersection permet de limiter les trajectoires prises en compte par le système au seul sous-ensemble des trajectoires effectivement possibles compte tenu de l'infrastructure routière.

Le modèle géométrique de l'intersection peut être obtenu de différentes manières.

Dans un mode de réalisation, l'unité de calcul est apte à à établir le modèle géométrique de l'intersection à partir d'au moins une trajectoire d'un véhicule ayant déjà traversé l'intersection.

Comme le système d'assistance est surtout utile sur les intersections très fréquentées, très souvent le modèle géométrique de ces intersections peut être reconstruit simplement à partir de la trajectoire des différents véhicules ayant traversé l'intersection.

Dans un mode de réalisation, le système d'assistance comporte un dispositif d'acquisition d'environnement apte à fournir au moins une information d'environnement relative à la configuration spatiale d'un environnement du véhicule, et l'unité de calcul est apte à utiliser ladite au moins une information d'environnement pour établir le modèle géométrique de l'intersection, et/ou déterminer ledit faisceau de trajectoires, et/ou lesdits profils cinématiques.

Le dispositif d'acquisition peut être notamment de trois types : D'une part, il peut être un système de positionnement géographique ou GPS. Dans ce cas, le modèle géométrique de l'intersection, ou des informations sur celui-ci, est téléchargé à partir des informations fournies par le GPS. Il peut inclure également tout type de dispositif d'acquisition de signaux routiers. Certains signaux routiers signalent en effet la proximité d'une intersection et dans certains cas la configuration de celle-ci ; la détection de ces signaux permet donc de bâtir un modèle - éventuellement approximatif - de l'intersection. Le dispositif d'acquisition peut enfin être un dispositif d'acquisition de géométrie d'environnement Dans ce dernier cas, il peut se confondre avec le dispositif d'identification et de localisation d'objet mobile.

L'unité de calcul peut également être apte à établir le modèle géométrique de l'intersection à partir d'un modèle type d'intersection enregistré dans une mémoire de l'unité.

Une fois construit le modèle géométrique de l'intersection, l'unité de calcul est apte à déterminer pour chaque élément parmi le véhicule et l'objet mobile un ou plusieurs faisceaux de trajectoires possibles envisagées pour l'élément en prenant en compte le modèle géométrique de l'intersection.

Il reste alors à évaluer parmi les différentes trajectoires possibles, lesquelles vont être effectivement suivies, et à quelle vitesse.

Pour évaluer cela, dans un mode de réalisation le système d'assistance comporte en outre un dispositif d'acquisition d'intention apte à fournir au moins une information d'intention parmi une position angulaire (a) du volant, une vitesse de rotation ou une accélération angulaire de celui-ci ; ou encore un état d'un clignotant du véhicule ; et l'unité de calcul est apte à utiliser ladite information d'intention pour déterminer ledit faisceau de trajectoires, et/ou lesdits profils cinématiques. Les informations d'intention permettent en effet d'établir des trajectoires et des profils cinématiques particulièrement probables, au vu de l'attitude du conducteur du véhicule (ou du conducteur d'un véhicule identifié parmi les objets mobiles).

Dans un premier mode de réalisation, l'établissement des profils cinématiques et de leurs probabilités respectives se fait en deux étapes.

L'unité de calcul, pour déterminer lesdits profils cinématiques et les probabilités de ceux-ci, est apte, pour chaque élément parmi le véhicule et l'objet mobile :
- à déterminer tout d'abord une commande permettant un déplacement de l'élément considéré le long d'une trajectoire du faisceau de trajectoires déterminées pour l'élément, et une probabilité d'une telle commande ; et ensuite,
- à déterminer un profil cinématique de l'élément lorsque la commande lui est appliquée pendant son déplacement sur la trajectoire. La probabilité du profil cinématique est considérée comme égale à la probabilité de la commande envisagée pour l'élément considéré. La commande peut être une commande de freinage avant l'intersection suivie d'une accélération en sortie d'intersection, assortie d'une commande sur le volant.

Lorsqu'une information d'intention est disponible, elle est naturellement exploitée par l'unité de calcul qui utilise cette information d'intention pour déterminer la probabilité que la commande soit appliquée à l'élément considéré (et/ou une probabilité de cette commande).

Pour assurer non seulement au conducteur du véhicule le franchissement sans collision de l'intersection, mais également le franchissement sans perturbation du trafic, c'est-à-dire sans gêne inacceptable pour les autres véhicules ou objets mobiles, le procédé de détermination d'une information selon l'invention peut en outre comporter les étapes suivantes :
f) pour une trajectoire et un profil cinématique envisagés pour le véhicule, ou parmi toutes les collisions envisagées pour le véhicule, on détermine le point probable de collision, pour lequel la probabilité de collision est maximale ;
g) on détermine la trajectoire et le profil cinématique associé, pour ledit objet mobile, dits 'd'évitement' qui permettent que l'objet mobile évite la collision tout en tout en atteignant une valeur limite prédéterminée, dite de 'pré-accident' ; et
h) on réalise une comparaison pour déterminer si la trajectoire et le profil cinématique d'évitement satisfont ou non à un critère d'acceptabilité prédéterminé pour le mobile.

La valeur limite de 'pré-accident' peut par exemple être une distance minimale que le véhicule doit conserver à tout instant par rapport aux autres objets mobiles qui l'entourent.

La comparaison fournit une valeur, appelée 'gêne au mobile', qui peut être notamment binaire ou continue (et/ou être multi-composante). La gêne au mobile peut valoir 0% lorsque l'objet mobile n'a pas à décélérer particulièrement du fait de la présence du véhicule (il n'est pas gêné par l'arrivée du véhicule) ; elle peut valoir 100% lorsqu'une décélération au moins égale à celle correspondant à un freinage d'urgence est nécessaire pour que l'objet mobile évite la collision ou plutôt limite la gravité de celle-ci.

Différents paramètres peuvent intervenir dans le calcul de la gêne au mobile, notamment les vitesses relatives des véhicules, mais aussi un ou plusieurs paramètres liés à la psychologie du conducteur, qui peuvent par exemple intervenir comme un coefficient s'appliquant à la distance de sécurité, aux valeurs de décélération acceptables, etc.

Dans un mode de réalisation, l'unité de calcul est apte à déterminer les profils cinématiques et/ou les probabilités de ceux-ci en fonction de la gêne au mobile. En particulier, plus la gêne aux mobiles est élevée pour un couple 'trajectoire-profil cinématique' considéré, plus la probabilité affectée à celui-ci est faible.

Enfin, pour augmenter le service rendu par le système d'assistance, le système d'assistance peut comporter en outre des moyens pour diffuser et/ou exploiter directement les informations produites.

Le système peut ainsi comporter des moyens d'information du conducteur, ces moyens pouvant être visuels, notamment en réalité augmentée et/ou tête haute, sonores et/ou haptiques.

D'autre part, l'unité de calcul peut être apte en outre à transmettre une commande d'action applicable à un organe de conduite et/ou de sécurité du véhicule, par exemple une commande de freinage, d'accélération ; de position ou de mouvement du volant ; ou encore de prétensionnement de ceintures de sécurité et/ou du bouclier, etc. Une telle consigne d'action est alors appliquée aux organes du véhicule sans intervention ni contrôle du conducteur du véhicule.

L'invention vise enfin un véhicule routier comprenant un système d'assistance tel que défini précédemment.

Le véhicule routier peut comporter au moins un organe de commande, par exemple un frein ou un organe de direction, des moyens d'actionnement de cet organe, et le système d'assistance est apte à transmettre une commande d'action telle qu'indiquée précédemment directement aux moyens d'actionnement, de manière à déclencher un actionnement de l'organe de commande sans intervention du conducteur du véhicule.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique d'une intersection routière, faisant apparaître les faisceaux de trajectoires envisagés pour des véhicules abordant l'intersection ;
- la figure 2 est une représentation schématique d'un système d'assistance selon l'invention ;
- la figure 3 est une représentation schématique des étapes de traitement d'informations, dans le système de la figure 2 ;
- les figures 4a et 4b sont des courbes représentant des vitesses possibles du véhicule en fonction de la trajectoire suivie et de la commande appliquée au véhicule, lors du passage de celui-ci dans l'intersection illustrée par les figures 1c et 4 ;
- la figure 5 est une vue schématique d'une intersection routière, faisant apparaître les faisceaux de trajectoires de deux véhicules traversant l'intersection ; et
- la figure 6 est une vue présentant une courbe de probabilité associée à une tranche temporelle apparaissant sur la figure 6.

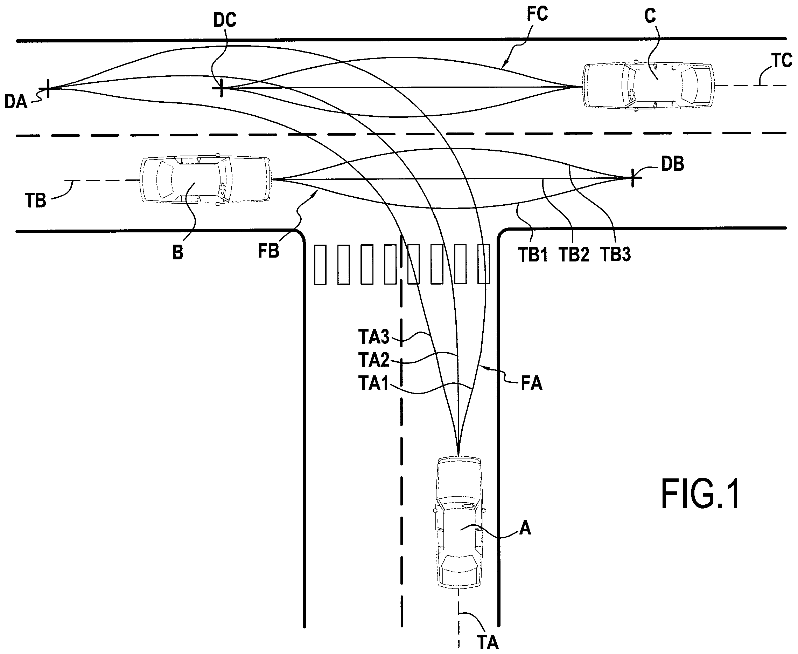

L'intersection ou carrefour routier présentée sur la figure 1 se présente avec une voie d'arrivée 10 d'un véhicule A, et une voie 14 perpendiculaire à la voie 10. A l'intersection, le véhicule A peut donc tourner sur la voie 14 vers la gauche ou vers la droite.

Le passage du véhicule A à cette intersection est envisagé à titre d'exemple à un moment où des véhicules B et C s'apprêtent tous deux à franchir l'intersection. Ces véhicules B et C constituent des 'objets mobiles' au sens de l'invention.

Le système d'assistance objet de la présente invention vise à aider le conducteur à décider de s'engager ou non sur la voie 14 avant le passage de ces véhicules.

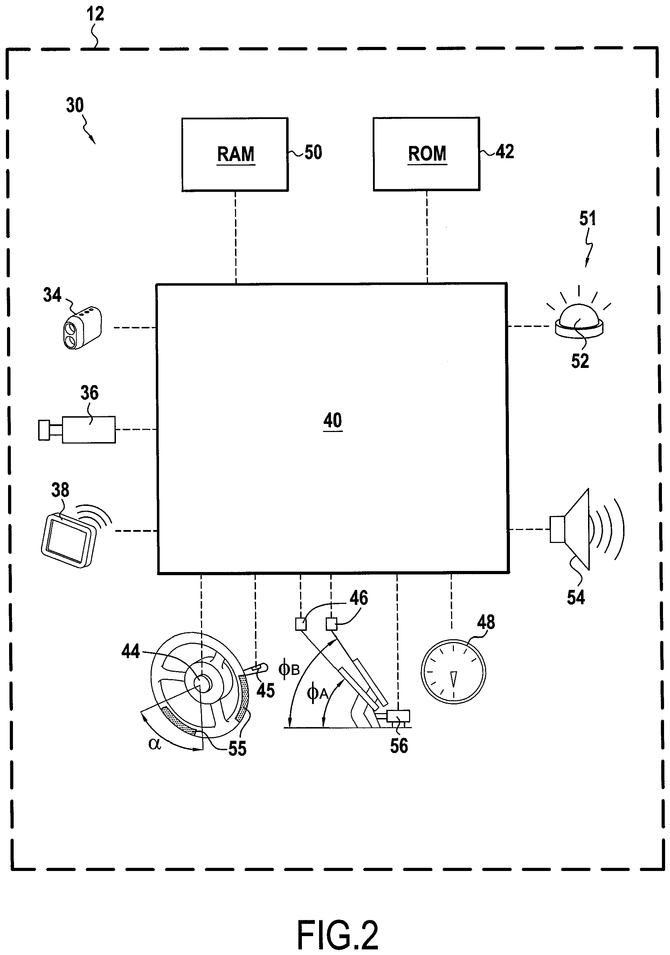

La figure 2 représente un premier mode de réalisation de l'invention, constitué par un système 30 d'assistance à la conduite implanté à bord du véhicule A.

Ce système 30 comporte un dispositif d'identification et de localisation d'objets mobiles comportant un télémètre 34 (il peut s'agir d'un télémètre ou d'un scanner 3D) et une caméra 36, couplés à une unité de calcul 40, constituée par un ou plusieurs calculateurs.

Les informations fournies par le télémètre 34 et la caméra 36 permettent à l'unité de calcul 40 d'identifier les objets mobiles présents au voisinage du véhicule. Pour chacun d'eux, l'unité de calcul détermine sa position Xi (avec i=B pour le véhicule B et i=C pour le véhicule C) et sa vitesse Vi (i=B,C) relative par rapport au véhicule A.

En particulier, à partir de ces informations, l'unité de calcul 40 est à même de reconstruire la trajectoire ou trace des véhicules B et C lors de leur traversée de l'intersection. Elle est ainsi à même de reconstruire les trajectoires TB et TC des véhicules B et C.

Le système 30 comporte en outre un dispositif d'acquisition d'environnement comprenant un GPS 38, également couplé à l'unité de calcul 40. Le dispositif d'acquisition d'environnement comporte également une portion d'une mémoire morte 42 du système 30, dans laquelle sont stockées une carte géographique et des informations décrivant la configuration spatiale de la région dans laquelle circule le véhicule comprenant en particulier les modèles géométriques des différentes intersections de cette région.

Sur la base des informations fournies par le GPS, l'unité de calcul 40 extrait de la mémoire 42 le modèle géométrique tridimensionnel de l'intersection à laquelle arrive le véhicule A.

Le système d'assistance 30 comporte également des capteurs d'angles 44, 46, qui mesurent respectivement la position angulaire α du volant du véhicule, et les positions angulaires Φ_{A}, Φ_{B} des pédales de frein et d'accélérateur, ainsi qu'un capteur de position de clignotants 45, et un capteur de vitesse 48.

A partir des informations du capteur d'angle 44 et du capteur de vitesse 48, l'unité de calcul 40 par ailleurs est à même de reconstruire la propre trajectoire TA du véhicule A.

Le système 30 comporte en outre une mémoire vive 50. Dans celle-ci sont enregistrées toutes les informations collectées ou produites jusqu'à l'instant considéré par le système 30, à l'exception des informations variables en fonction du temps et datant de plus de 5 secondes, qui sont effacées. La mémoire 50 contient donc notamment les prévisions de trajectoire du véhicule faites par l'unité de calcul 40 depuis l'activation du système d'assistance 30.

En sortie, l'unité de calcul 40 est reliée à des moyens 51 d'information du conducteur. Ces moyens comportent une diode 52 pour créer un signal d'alarme visuel, un haut-parleur 54 pour créer un signal d'alarme sonore, et des bandes vibrantes 55 sur le volant pour générer un signal d'alarme haptique.

L'unité de calcul 40 est reliée de plus à un actionneur, en l'occurrence un vérin 56 placé de manière à pouvoir actionner la pédale de frein du véhicule. Ainsi, une commande de freinage transmise par l'unité 40 au vérin 56 déclenche l'abaissement de la pédale de frein et le freinage du véhicule par l'actionneur 56, sans intervention du conducteur du véhicule.

Le fonctionnement du système d'assistance 30 va maintenant être expliqué en relation avec les figures 1, 3, 4a et 4b.

Le système 30 peut fonctionner en permanence ou être activé seulement à l'approche d'une intersection.

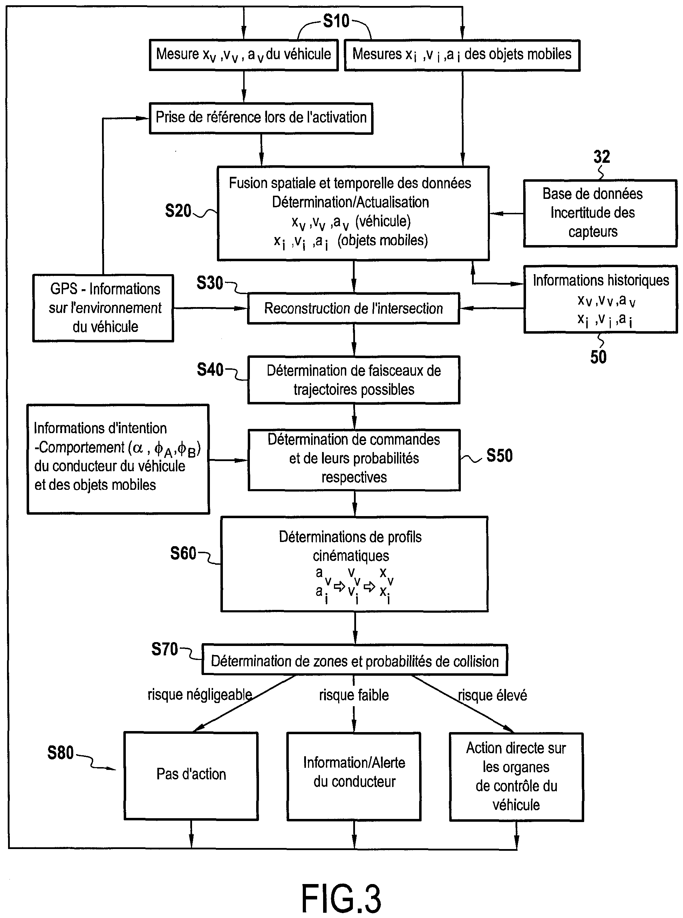

Dans ce dernier cas, il peut être mis en marche soit manuellement par le conducteur, soit automatiquement par l'unité de calcul 40 à l'aide des informations du GPS 38, à l'approche d'une intersection. L'unité de calcul 40 exécute alors en boucle l'algorithme de la figure 3, jusqu'à ce que le véhicule A soit sorti de l'intersection.

On suppose qu'à un instant t0, le véhicule A arrive à l'intersection illustrée sur la figure 1, sur laquelle les véhicules B et C ne vont pas tarder à s'engager, et le système d'assistance est activé.

A partir de cet instant, les capteurs du système 30 lui fournissent les informations suivantes nécessaires à son fonctionnement (étape de traitement S10) : Le télémètre 34 et la caméra 36 collectent des informations de distance, de position, de vitesse des objets mobiles identifiés, ainsi que des images de ceux-ci.

Ces informations sont fournies dans un premier temps dans le référentiel du véhicule.

La vitesse du véhicule par rapport au sol est alors utilisée par l'unité de calcul 40 pour, parmi les informations fournies par le télémètre 34 et la caméra 36, extraire les informations relatives aux objets mobiles et distinguer celles-ci des informations relatives à l'environnement fixe du véhicule, c'est-à-dire l'infrastructure routière.

Le GPS 38 en liaison avec la mémoire 42 fournit la position du véhicule et la configuration spatiale de l'intersection.

Enfin, la mémoire vive RAM de l'unité de calcul 40 fournit les informations sur les positions, vitesses, accélérations du véhicule et des objets mobiles identifiés, telles que mesurées ou estimées aux instants précédents et pour l'instant présent.

La définition d'un repère fixe (lié au sol) se fait lors de l'activation du système d'assistance 30. Lors de cette activation, l'unité de calcul 40 définit un repère de référence fixe, lié au sol, qui sera utilisé pendant toute la traversée de l'intersection (étape de prise de référence).

Dans une deuxième étape de traitement S20, l'unité de calcul 40 opère la fusion spatiale et temporelle des différentes informations relatives aux positions, vitesses, accélérations des différents mobiles (à savoir, le véhicule et les autres objets mobiles identifiés). Elle détermine donc la position Xv, la vitesse Vv et l'accélération Av du véhicule, dans le repère de référence (par rapport au sol), ainsi que la position Xi, la vitesse Vi, l'accélération Ai des différents objets mobiles identifiés. Par exemple, à partir de l'instant illustré par la figure 1c), les deux véhicules B et C sont identifiés ; leurs positions, leurs vitesses et leurs accélérations sont alors déterminées (ou actualisées lors des boucles successives de l'algorithme mis en oeuvre par l'unité de calcul 40).

Dans cette opération, les incertitudes de mesure des différents capteurs, enregistrées dans une base de données 32, sont prises en compte.

Dans une troisième étape de traitement S30, l'unité de calcul 40 reconstruit (puis lors des boucles ultérieures, actualise) le modèle géométrique de l'intersection. Pour cela, l'unité de calcul 40 à partir des données GPS télécharge un modèle tridimensionnel de l'intersection à partir des informations fournies par le GPS 38. Elle recale précisément ce modèle théorique dans le repère de référence en utilisant les trajectoires TA, TB, et TC du véhicule et des véhicules B et C en train de franchir l'intersection. En combinant ces informations elle met à jour s'il y a lieu le modèle géométrique de l'intersection. En l'absence d'informations, notamment d'informations fournies par le GPS, le modèle géométrique peut être reconstruit sur la seule base des trajectoires TA, TB et TC des véhicules en train de franchir l'intersection (et/ou d'autres véhicules en train de franchir ou ayant déjà franchi l'intersection, et suivis par le système 30).

Dans une quatrième étape de traitement S40, l'unité de calcul 40 détermine pour chaque mobile (le véhicule A, les véhicules identifiés B et C) le faisceau des trajectoires possibles pour ce mobile, en prenant en compte le modèle géométrique de l'intersection déterminé à l'étape S30. Cette opération est faite pour le véhicule A ainsi que pour les véhicules B et C. Dès que de nouveaux véhicules arrivant à l'intersection sont identifiés par le télémètre 34 ou la caméra 36, ces véhicules sont identifiés puis suivis dans l'espace en fonction du temps.

A titre d'exemple, lorsque le véhicule A est dans la position illustrée par la figure 1, lors de l'étape 40 l'unité de calcul 40 détermine les faisceaux FA, FB et FC de trajectoires possibles pour les différents véhicules A, B et C représentés.

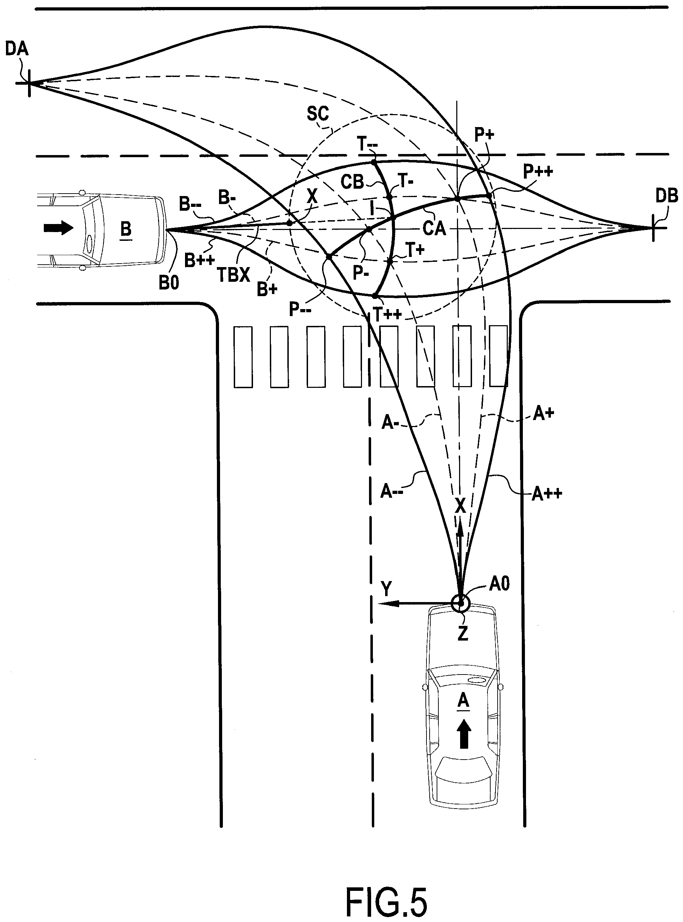

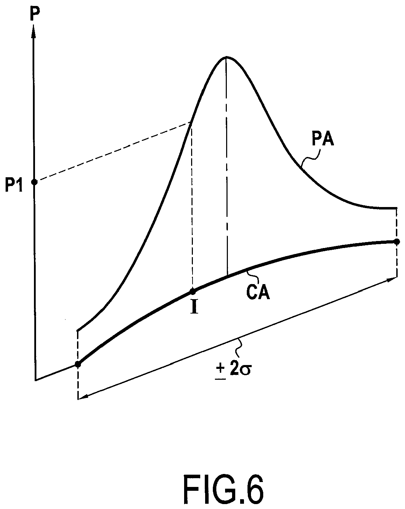

Selon le mode de réalisation de l'invention, un faisceau peut être discret et comporter quelques trajectoires envisagées, par exemple les trajectoires TA1,TA2, TA3 et TB1, TB2, TB3 (Fig.1). Il peut aussi comporter une infinité de trajectoires, comme cela sera décrit plus loin en relation avec les figures 5 et 6.

Lors de la détermination de ces faisceaux, l'unité de calcul 40 limite le nombre et/ou la position et/ou la forme des trajectoires envisagées en prenant en compte différentes informations complémentaires et en appliquant un ou plusieurs critères de sélection. L'unité 40 prend notamment en compte la géométrie de l'intersection, de la chaussée. Pour faciliter la détermination des faisceaux de trajectoires FA,FB,FC, il est supposé que chacun de ces faisceaux de trajectoires converge vers un point de destination supposé pour le véhicule considéré. Les différents points de destination sont situés sur les voies de sortie de l'intersection (points de destination DA, DB, DC) vers laquelle il est supposé que le véhicule va se diriger. L'unité de calcul peut éventuellement prendre en compte des points de destination multiples, pour un même faisceau de trajectoires ; et notamment des points de destination répartis sur un segment de droite.

Les faisceaux de trajectoires sont déterminés d'autre part sur la base d'hypothèses faites quant au comportement possible pour le véhicule (notamment, accélérations/décélérations maximales tangentielles, transverses ou rotationnelles admissibles, rayon de braquage du véhicule,etc.). En fonction de ces hypothèses, des faisceaux de trajectoires possibles plus ou moins larges sont déterminés par l'unité 40.

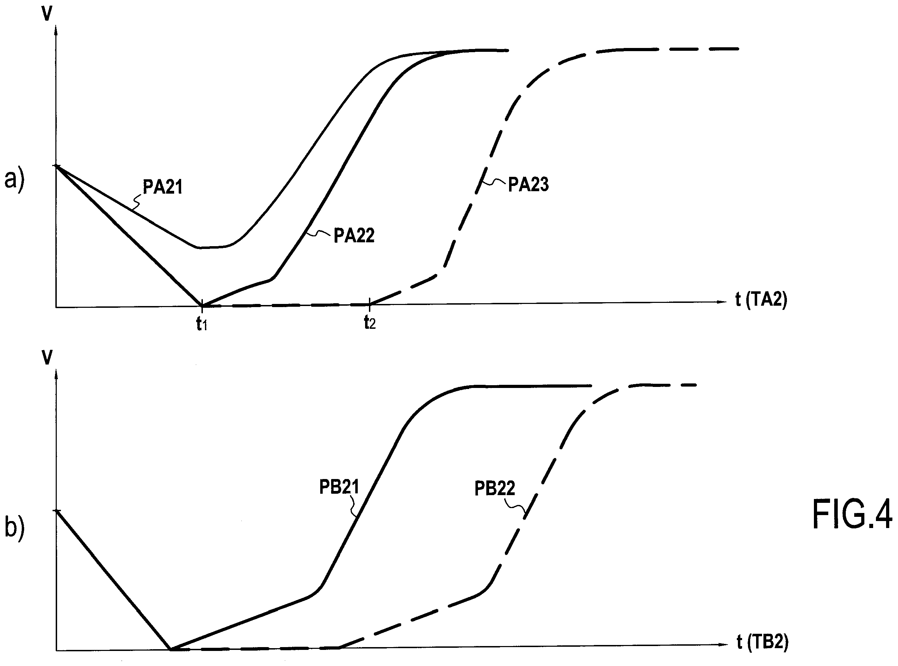

Par 'trajectoire possible', on désigne une trajectoire que l'un des véhicules peut suivre pour se diriger jusqu'à l'une des voies de sortie de l'intersection. Dans l'exemple de la figure 4, les trajectoires possibles prévues pour le véhicule A prévoient toutes un virage à gauche ; les trajectoires possibles prévues pour les véhicules B et C vont tout droit.

Ensuite, au cours d'une cinquième étape de traitement S50, l'unité de calcul 40 détermine pour chacun des mobiles une ou plusieurs commandes possibles pour suivre les trajectoires envisagées à l'étape S40. Elle affecte également des probabilités respectives à ces différentes commandes.

Les commandes sont déterminées en prenant en compte des préférences prédéterminées quant aux accélérations que doivent subir le véhicule et les véhicules identifiés. Différents scénarios peuvent être envisagés (lent, rapide, etc. comme indiqué précédemment), ce qui amène à définir différentes commandes applicables.

Pour déterminer ensuite les probabilités respectives de ces différentes commandes, l'unité de calcul 40 utilise alors les informations d'intention dont elle dispose. Ces informations concernent essentiellement le véhicule A, plutôt que les autres objets mobiles. Ces informations peuvent être notamment le profil d'accélération tangentielle (freinage/accélération) de l'un des véhicules ; et pour le véhicule A lui-même, l'utilisation d'un clignotant, qui signale une intention de tourner et est indiquée par le capteur 45 ; la pression ou le relâchement des pédales de frein ou d'accélérateur, indiqué(e) par les capteurs 46 ; le changement d'orientation du volant, indiqué par le capteur d'orientation du volant 44.

Des informations quant vitesses et accélérations admissibles pour les véhicules, quant aux positions et vitesses des véhicules par rapport à l'intersection, peuvent également être prises en compte pour évaluer quelles destinations peuvent être visées par chacun des véhicules.

Sur la base de ces différentes informations, l'unité de calcul évalue quelles sont les destinations probables des différents véhicules. Pour chaque commande envisagée pour un véhicule, elle affecte une probabilité à la réalisation de la commande et donc à la trajectoire correspondante (par somme des probabilités respectives des différents profils cinématiques calculés pour cette trajectoire). Ce calcul est effectué par une technique de propagation d'erreurs normalisées en fonction du temps.

Cette probabilité est alors recalculée ou ajustée en prenant en compte la gêne aux mobiles associée à un couple 'trajectoire et profil cinématique'. Cette gêne varie entre 0%, lorsque le véhicule considéré n'a pas à décélérer lorsque le véhicule A franchit l'intersection (compte tenu de la distance de sécurité applicable), à 100%, lorsque le véhicule doit réaliser une décélération supérieure à un freinage d'urgence.

Dans ce but, pour un couple 'trajectoire et profil cinématique', la gêne résultant pour les autres mobiles du fait que le mobile considéré suive la trajectoire considérée suivant le profil cinématique considéré est évaluée. La probabilité du profil cinématique (associé à la trajectoire considérée) est alors ajustée en fonction du résultat obtenu : Cette probabilité est réduite relativement d'autant plus que la gêne induite pour les autres mobiles est élevée.

Naturellement, comme le traitement de données effectué par l'unité de commande 40 est itératif, l'évaluation de la gêne au mobile s'affine de plus en plus, au fur et à mesure que les trajectoires envisagées pour les différents véhicules s'affinent. Au fur et à mesure qu'un véhicule s'approche de l'intersection, l'algorithme de traitement de données de l'unité de calcul 40 écarte peu à peu certaines trajectoires, en affectant une probabilité faible puis nulle aux commandes et aux profils cinématiques associés à ces trajectoires.

Ensuite, au cours d'une sixième étape de traitement S60, l'unité de calcul 40 détermine (ou actualise) les profils cinématiques associés aux différentes commandes calculées lors de l'étape S50.

A titre d'exemple, les profils cinétiques envisagés pour le véhicule A lorsqu'il est dans des situations illustrées par la figure 1, sont présentés par les figures 4a et 4b. Des profils similaires (non illustrés) sont calculés simultanément pour les véhicules B et C.

Pour chacune des trajectoires, une ou plusieurs commandes ont précédemment été identifiées lors de l'étape S50. Pour la trajectoire TA2 qui consiste pour le véhicule A à tourner à gauche (Figures 1 et 4a), trois commandes différentes sont envisagées par l'unité de calcul 40 :
Suivant la première commande, le véhicule A décélère jusqu'à un instant t1, puis réaccélère, jusqu'à atteindre une nouvelle vitesse de croisière. Ces accélérations définissent un profil de vitesses PA21 qui définit le profil cinématique du véhicule A sur la trajectoire TA2. Avec la deuxième et la troisième commande envisagées, le véhicule freine jusqu'à s'arrêter à l'intersection. Ensuite, soit il repart immédiatement (courbe de vitesse PA22), et accélère jusqu'à atteindre la vitesse de croisière, soit il attend jusqu'à un instant t2 avant de redémarrer (courbe de vitesse PA23).

Pour la trajectoire TB2 qui est l'une des trajectoires envisagées pour le véhicule B (Figures 1 et 4b), deux commandes différentes sont envisagées et conduisent à des profils de vitesse PB21 et PB22 comparables aux profils PA22 et PA23, le franchissement de l'intersection sans arrêt n'étant pas envisagé pour la trajectoire TB2. Des probabilités sont calculées par l'unité 40 pour les différents profils cinématiques.

Ensuite, des probabilités sont affectées aux différentes trajectoires envisagées, en association avec les différents profils cinématiques.

De manière optionnelle, en plus de trajectoires explicitement définies et envisagées pour le véhicule (ou un objet mobile), dites trajectoires de référence, des trajectoires intermédiaires peuvent être également prises en compte. De telles trajectoires intermédiaires sont des trajectoires dont au moins un tronçon est situé entre deux trajectoires de référence.

Dans ce cas, pour certaines trajectoires intermédiaires, l'unité 40 affecte à la trajectoire intermédiaire et au profil cinématique associé à celle-ci une probabilité en fonction des trajectoires de référence entre lesquelles la trajectoire considérée (ou un tronçon de celle-ci) est située. Par exemple, la probabilité affectée à la trajectoire TB2 et à un profil cinématique associé peut être calculée en fonction de la probabilité des trajectoires TB1 et TB3, et des profils cinématiques associés à celles-ci.

Ensuite, au cours d'une septième étape de traitement S70, l'unité de calcul 40 détermine les zones et probabilités de collision en fonction des trajectoires, des profils cinématiques et de leurs probabilités respectives, pour les différents mobiles.

Si un risque de collision est détecté, l'unité 40 détermine les zones de collision possibles et les probabilités des collisions envisagées, afin de définir le niveau et le type de signal à transmettre (étape S80). En fonction des risques identifiés (le risque dépendant de la gravité d'une collision envisagée et de la probabilité de celle-ci), l'unité 40 transmet des signaux d'alarme correspondants au conducteur via les éléments 52, 54, 55.

Si la solution identifiée nécessite impérativement une décélération (ou une action sur un organe de commande du véhicule) supérieure à un seuil prédéterminé, une commande correspondante est transmise au véhicule. Notamment, notamment une commande de freinage peut être transmise au vérin 56 afin d'opérer un freinage forcé du véhicule. Dans le même temps, un débrayage du moteur est alors également commandé de manière forcée par le système 30.

Les figures 5 et 6 présentent de manière plus détaillée comment est mis en oeuvre le procédé selon l'invention et plus particulièrement, comment la probabilité de passage du véhicule par un point donné d'une trajectoire intermédiaire est évaluée au moyen de trajectoires de référence.

L'unité de commande exécute un programme qui permet de réaliser les opérations suivantes :

### a) Détermination des trajectoires de référence pour le véhicule

Pour chaque véhicule, on connaît au moins :
- l'origine du faisceau de trajectoires possibles du véhicule (points A0,B0) à l'avant des véhicules A et B ; et
- le point destination du faisceau de trajectoires possibles du véhicule (points DA,DB), en sortie de l'intersection. Les points destination peuvent éventuellement être remplacés par une zone de destination, notamment sous forme d'un segment.

L'unité 40 calcule d'abord la frontière M des profils cinématiques. Il s'agit de la matrice (n,p+1) où n est le nombre de paramètres pris en compte, 3 dans le cas présent puisque l'unité 40 prend en compte les paramètres VX, Vy (vitesses suivant X et Y ; l'axe X étant l'axe longitudinal du véhicule A), ainsi que RZ le taux de lacet autour de l'axe Z.

La frontière M des profils cinématiques est calculée en utilisant un filtre de Kalman, pour prédire l'évolution des vitesses maximales (Vx, Vy, Rz), en connaissant l'état de départ (Vx0, Vy0, Rz0) et l'état d'arrivé supposé (Vxf, Vyf, Rzf). Elle est de la forme :

| | | | | | | |
|---|---|---|---|---|---|---|
| (Vx0 | Vx0 | Vy0 | Vy0 | Rz0 | Rz0) | 0 |
| (.. | .. | .. | .. | .. | .. ) | 1 |
| (.. | .. | .. | .. | .. | .. ) | . |
| (.. | .. | .. | .. | .. | .. ) | . |
| (Vxmin(k) | Vxmax(k) | Vymin(k) | Vymax(k) | Rzmin(k) | Rzmax(k))k | |
| (.. | .. | .. | .. | .. | .. ) | . |
| (.. | .. | .. | .. | .. | .. ) | . |
| (.. | .. | .. | .. | .. | .. ) | . |
| (Vxf | Vxf | Vyf | Vyf | Rzf | Rzf) | p |

dans laquelle : La matrice M comporte p lignes correspondant aux p pas de temps pris en compte entre l'instant t0 initial et l'instant tp final.
Sur une ligne correspondant à un instant T(k) = t0 + kΔt, la matrice M comporte six valeurs : Vxmin(k) et Vxmax(k), et Vymin(k) et Vymax(k), sont les vitesses minimale et maximale que le véhicule peut atteindre à l'instant T(k) en suivant l'une des trajectoires envisagées, respectivement suivant l'axe X (du véhicule à l'instant t0) et suivant l'axe Y ;
Rzmin(k) et Rzmax(k) sont les taux de lacet minimal et maximal que le véhicule peut atteindre à l'instant T(k) en suivant l'une des trajectoires envisagées.

### b) Détermination d'un profil cinématique de référence, pour le parcours de chacune des trajectoires de référence

Les opérations a) et b) sont réalisées simultanément à l'aide d'un algorithme de recherche de chemin. On spécifie que l'algorithme doit minimiser un ou plusieurs critère(s) prédéterminé(s) portant sur des vitesses et/ou accélérations du véhicule. Par suite, l'algorithme de recherche de chemin permet en sortie d'obtenir d'une part, des trajectoires extrêmes, à savoir des frontières (au sens topologique) du faisceau de trajectoires, et d'autre part les profils cinématiques associés à ces trajectoires extrêmes.

Ces trajectoires extrêmes (extrêmes au sens où elles maximisent certains critères, pour certaines valeurs de paramètres prédéfinies) sont utilisées comme trajectoires de référence et notées courbes A--,A++ et B--,B++.

Le critère prédéterminé est spécifié normalement de telle sorte que le profil cinématique trouvé soit un profil préféré pour le conducteur du véhicule (accélérations minimales, vitesse de circulation préférée).

En pratique, l'unité 40 prend en compte quatre critères possibles, dans le mode de réalisation présenté.

On note Acc une accélération latérale (ou transverse) moyenne habituellement considérée comme acceptable par les occupants d'un véhicule. L'unité 40 enregistre les accélérations subies par le véhicule A ; l'unité 40 tient à jour un paramètre qui est l'écart-type σ sur les accélérations latérales que subit le véhicule A lorsque le conducteur pilote lui-même le véhicule, c'est-à-dire lorsque l'unité 40 n'intervient pas sur l'accélération, le freinage ou la position du volant.

Pour les objets mobiles autres que le véhicule A, une valeur d'écart-type σ0 fixe est utilisée.

Pour chacun des véhicules A et B, l'unité 40 calcule quatre trajectoires de référence correspondant respectivement aux trajectoires possibles extrêmes pour des accélérations latérales de Acc±σ, Acc±2σ (courbes A--,A-A+,A++;B--,B-,B+,B++).

Simultanément, l'unité 40 détermine le profil cinématique préféré associé à chacune de ces trajectoires.

### c) Détermination des tranches temporelles

L'unité 40 détermine alors successivement les tranches temporelles, pour chacun des véhicules (ou mobiles), aux différents pas de temps Δt considérés entre un instant initial t0 et un instant final tp. (Le calcul est limité à un horizon temporel ou en distance, ce qui conduit à limiter la valeur du dernier pas tp).

Pour chaque instant t0+kΔt, l'unité 40 calcule la position des quatre points, pour chacun des véhicules A et B, situés sur les trajectoires de référence et auxquels se situe le véhicule correspondant s'il suit le profil cinématique de référence.

Sur la figure 4, le calcul est illustré à un instant t+ kΔt.

L'unité 40 détermine ainsi des points P--,P-,P+,P++ pour les courbes A--, A-, A+, A++; et des points T--, T-, T+, T++, pour les courbes B--,B-,B+, et B++.

L'unité 40 crée des courbes CA et CB par interpolation entre les points P--, P-, P+, P++ et respectivement T--, T-, T+, T++. Ces courbes CA et CB constituent les tranches temporelles respectives du véhicule A et du véhicule B à l'instant t0+kΔt considéré.

### d) Détermination des probabilités de passage des véhicules A et B aux différents points de la tranche temporelle

Pour chaque pas de temps, l'unité 40 détermine alors les paramètres de deux fonctions de probabilité gaussiennes PA et PB, dont les moyennes sont centrées respectivement sur les courbes CA et CB. Les fonctions PA et PB sont déterminées de telle sorte que l'intervalle à +/-2σ des gaussiennes PA, PB correspondante à la largeur des courbes CA, CB, c'est-à-dire respectivement de A++ à A-et de B++ à B-- (voir Fig.7), et cela parce que les courbes CA,CB elles-mêmes sont les courbes limites à +/- 2 σ de comportement du conducteur (ou respectivement des véhicules en général) : Les courbes de probabilité (PA,PB) sont définies (de préférence) en prenant en compte la probabilité des courbes de référence (CA,CB) qui les sous-tendent.

A titre d'exemple, la courbe CA et la probabilité gaussienne PA correspondante sont représentées de manière approchée sur la figure 7.

Les probabilités PA et PB sont considérées comme représentant les probabilités de passage des véhicules A et B par les points considérés de leurs tranche temporelles respectives.

### e) Détermination des probabilités de collision entre les véhicules A et B

Le calcul est réalisé pour l'ensemble des pas de temps entre t0 et tp.

Pour chaque pas de temps, l'unité 40 détermine si les courbes CA et CB ont une intersection non vide. Si c'est le cas, le point d'intersection I est un point de collision potentiel ; la probabilité P d'occurrence d'une collision en ce point est considérée égale au produit P1 x P2, où P1 et P2 sont les valeurs de probabilité respectives sur les courbes PA et PB pour le point I.

### f) Détermination du point probable de collision

L'unité 40 détermine alors, parmi tous les points de collision ainsi identifiés, celui dont la probabilité de collision P est la plus élevée.

### g) Détermination de la trajectoire d'évitement

L'unité 40 détermine alors la trajectoire et le profil cinématique associé, dits 'd'évitement'. Cette trajectoire et ce profil cinématique sont la trajectoire et le profil qui permettent d'une part que le mobile (le véhicule B) évite la collision, mais cela tout en passant ou en s'arrêtant à une distance minimale (prédéterminée, par exemple 2 mètres) entre les véhicules A et B. Ils correspondent donc au couple (trajectoire/profil cinématique) demandant le minimum d'effort d'évitement de la part du véhicule B.

Cette recherche de la trajectoire/profil cinématique d'évitement peut éventuellement être limitée, pour réduire le temps de calcul, à une trajectoire rectiligne allant de la position initiale du véhicule B à l'instant t0 au point I, ou encore être limitée à une trajectoire déterminée par interpolation à partir des trajectoires de référence et conduisant le véhicule B de sa position initiale au point I. Dans les deux cas, cette hypothèse simplificatrice permet de limiter le calcul à un calcul sur le profil cinématique, notamment un calcul de freinage.

En l'occurrence, l'unité 40 détermine une trajectoire d'évitement simplifiée, qui est la trajectoire en ligne droite TBX du point A0 au point de collision envisagé I. Le profil cinématique associé est alors calculé, qui permet que le véhicule s'arrête en un point X situé à une distance D (rayon du cercle de sécurité SC) du point I. L'unité 40 calcule alors la décélération maximale subie par le véhicule B pour respecter ce profil cinématique. Cette décélération est calculée comme étant la plus faible décélération permettant l'arrêt du véhicule B au point X.

### h) Comparaison avec un critère d'acceptabilité prédéterminé

Ayant déterminé le couple (trajectoire TBX, profil cinématique) d'évitement, l'unité 40 vérifie que ce couple satisfait un critère d'acceptabilité prédéterminé pour le véhicule B.

En pratique, l'unité 40 vérifie que le profil cinématique lors de la manoeuvre d'évitement n'impose pas au véhicule B de subir une décélération supérieure à une décélération maximale normalement considérée comme acceptable par les occupants d'un tel véhicule.

Le critère d'acceptabilité peut comprendre un ou plusieurs des critères suivants : une valeur maximale d'accélération et/ou de décélération ; une zone sur la chaussée sur laquelle l'objet ne peut pas (hors chaussée) ou ne veut pas (trop près de la limite de la chaussée, ou simplement écarté d'une trajectoire considérée comme préférée ou naturelle) se trouver ; une distance minimale prédéterminée à respecter entre le véhicule et l'objet mobile.

## Revendications

1. Procédé de détermination d'une information relative à une trajectoire envisagée pour un véhicule routier (A), comprenant une étape a) :
a) on détermine au moins deux trajectoires possibles pour le véhicule, dites trajectoires de référence (A--,A-,A+,A++) ;
le procédé **se caractérisant en ce qu'**il comporte en outre les étapes suivantes :
b) on détermine un profil cinématique de référence, pour le parcours de chacune des trajectoires de référence ;
c) on détermine une tranche temporelle de véhicule (CA) correspondant à un instant (t0+kΔt), en interpolant des points atteints à cet instant sur lesdites trajectoires de référence, parcourues suivant leurs profils cinématiques de référence respectifs, une tranche temporelle de véhicule étant l'ensemble des points susceptibles d'être atteints par le véhicule à un instant (t0+kΔt) considéré ; et
e) au moyen de ladite tranche temporelle, on détermine une information relative à la trajectoire envisagée en fonction des trajectoires de référence, la trajectoire envisagée étant une trajectoire intermédiaire passant entre les trajectoires de référence.

2. Procédé selon la revendication 1, dans lequel à l'étape e), ladite information est déterminée comme fonction de la position d'au moins un point de la trajectoire intermédiaire par rapport aux trajectoires de référence.

3. Procédé selon la revendication 1 ou 2, comprenant en outre une étape d) :
d) on détermine une probabilité (PA) pour le véhicule de passer par un point de la tranche temporelle de véhicule comme une fonction de la position dudit point sur la tranche temporelle de véhicule.

4. Procédé selon la revendication 3, comprenant en outre les étapes suivantes :
a2) on détermine, pour un objet mobile (B) par rapport au véhicule, au moins deux trajectoires de référence d'objet (B--,B-,B+,B++) ;
b2) on détermine un profil cinématique de référence, pour le parcours de chacune des trajectoires de référence d'objet ;
c2) on détermine une tranche temporelle d'objet (CB) correspondant audit instant (t0+kΔt), en interpolant des points atteints à cet instant sur lesdites trajectoires de référence d'objet, parcourues suivant leurs profils cinématiques de référence respectifs ;
d2) on détermine une probabilité (PB) pour l'objet de passer par un point de la tranche temporelle d'objet comme une fonction de la position dudit point sur la tranche temporelle d'objet ; et en outre,
à l'étape e), ladite information est une probabilité de collision entre le véhicule et l'objet, à un point d'intersection des tranches temporelles de véhicule et d'objet s'il existe ; et
ladite probabilité de collision est égale au produit des probabilité du véhicule et de l'objet de passer audit point d'intersection audit instant.

5. Procédé selon la revendication 4, dans lequel les étapes a) à d) et a2) à d2) sont réalisées pour une suite d'instants postérieurs à l'instant considéré ; le procédé comportant en outre les étapes suivantes :
f) pour une trajectoire et un profil cinématique envisagés pour le véhicule, ou parmi toutes les collisions envisagées pour le véhicule, on détermine le point probable de collision (I), pour lequel la probabilité de collision est maximale ;
g) on détermine la trajectoire (TBX) et le profil cinématique associé, pour ledit objet mobile, dits 'd'évitement' qui permettent que l'objet mobile évite la collision tout en tout en atteignant une valeur limite prédéterminée, dite de 'pré-accident' ; et
h) on réalise une comparaison pour déterminer si la trajectoire et le profil cinématique d'évitement satisfont ou non à un critère d'acceptabilité prédéterminé pour l'objet mobile.

6. Programme d'ordinateur comportant des instructions pour l'exécution des étapes du procédé selon l'une quelconque des revendications 1 à 5 lorsque ledit programme est exécuté par un ordinateur.

7. Support d'enregistrement lisible par un ordinateur sur lequel est enregistré un programme d'ordinateur comprenant des instructions pour l'exécution des étapes du procédé selon l'une quelconque des revendications 1 à 5.

8. Système d'assistance (30) pour véhicule routier (12), comprenant un dispositif (34-36-40) d'identification et de localisation d'objets mobiles (B,C), apte à identifier un objet mobile par rapport au véhicule et à estimer au moins une position (Xi) de celui-ci par rapport au véhicule, le système **se caractérisant en ce qu'**il comporte en outre une unité de calcul (40) apte à mettre en oeuvre le procédé suivant l'une quelconque des revendications 1 à 5.

9. Système d'assistance (30) selon la revendication 8, dans lequel, pour déterminer les trajectoires de référence et/ou les profils cinématiques de référence, l'unité de calcul est apte à prendre en compte une accélération tangentielle et/ou angulaire de l'objet mobile et/ou du véhicule qui varie en fonction du temps.

10. Système d'assistance selon la revendication 8 ou 9, dans lequel l'unité de calcul est apte à déterminer pour le véhicule et/ou l'objet les trajectoires de référence en prenant en compte un modèle géométrique de la chaussée sur laquelle se trouve le véhicule.

11. Système d'assistance selon la revendication 10, dans lequel l'unité de calcul est apte à établir le modèle géométrique de l'intersection à partir d'au moins une trajectoire d'un véhicule ayant déjà traversé ladite intersection.

12. Système d'assistance selon la revendication 10 ou 11, dans lequel l'unité de calcul est apte à établir le modèle géométrique de l'intersection à partir d'un modèle type d'intersection enregistré dans une mémoire de l'unité.

13. Système d'assistance (30) selon l'une quelconque des revendications 8 à 12, dans lequel les probabilités des trajectoires de référence et/ou des profils cinématiques de référence sont fonction d'au moins une valeur prédéterminée enregistrée dans une mémoire de l'unité de calcul, et ladite valeur enregistrée est une valeur d'accélération tangentielle et/ou transverse, et/ou de variation de taux de lacet, notamment représentative des comportements habituels ou de préférence du véhicule ou d'objets mobiles.

14. Véhicule routier (A) comprenant un système d'assistance selon l'une quelconque des revendications 8 à 13.

## Patentansprüche

1. Verfahren zur Bestimmung einer Information in Bezug auf einen für ein Straßenfahrzeug (A) angestrebten Kurs, umfassend einen Schritt a):
a) Bestimmen von zumindest zwei möglichen Kursen für das Fahrzeug, als Referenzkurse (A--, A-, A+, A++) bezeichnet,
wobei das Verfahren **dadurch gekennzeichnet ist, dass** es ferner die folgenden Schritte umfasst:
b) Bestimmen eines kinematischen Referenzprofils für die Strecke eines jeden der Referenzkurse,
c) Bestimmen einer Zeitscheibe des Fahrzeugs (CA) entsprechend einem Moment (t0+kΔt) durch Interpolieren von erreichten Punkten in diesem Moment auf den Referenzkursen, gefahren gemäß ihren jeweiligen kinematischen Referenzprofilen, wobei eine Zeitscheibe des Fahrzeugs die Gesamtheit der Punkte ist, die in einem betrachteten Moment (t0+kΔt) von dem Fahrzeug wahrscheinlich erreicht werden, und
e) Bestimmen, mittels der Zeitscheibe, einer Information in Bezug auf den angestrebten Kurs in Abhängigkeit der Referenzkurse, wobei der angestrebte Kurs ein Zwischenkurs ist, der zwischen den Referenzkursen verläuft.

2. Verfahren nach Anspruch 1, wobei in Schritt e) die Information in Abhängigkeit der Position von zumindest einem Punkt des Zwischenkurses in Bezug auf die Referenzkurse bestimmt wird.

3. Verfahren nach Anspruch 1 oder 2, umfassend ferner einen Schritt d):
d) Bestimmen einer Wahrscheinlichkeit (PA), dass das Fahrzeug einen Punkt der Zeitscheibe des Fahrzeugs passiert, in Abhängigkeit der Position des Punktes auf der Zeitscheibe des Fahrzeugs.

4. Verfahren nach Anspruch 3, umfassend ferner die folgenden Schritte:
a2) Bestimmen, für ein bewegliches Objekt (B) in Bezug auf das Fahrzeug, von zumindest zwei Referenzkursen des Objekts (B--, B-, B+, B++),
b2) Bestimmen eines kinematischen Referenzprofils für die Strecke eines jeden der Referenzkurse des Objekts,
c2) Bestimmen einer Zeitscheibe des Objekts (CB) entsprechend dem Moment (t0+kΔt) durch Interpolieren von erreichten Punkten in diesem Moment auf den Referenzkursen des Objekts, gefahren gemäß ihren jeweiligen kinematischen Referenzprofilen,
d2) Bestimmen einer Wahrscheinlichkeit (PB), dass das Objekt einen Punkt der Zeitscheibe des Objekts passiert, in Abhängigkeit der Position des Punktes auf der Zeitscheibe des Objekts, und wobei ferner
in Schritt e) die Information eine Wahrscheinlichkeit der Kollision zwischen dem Fahrzeug und dem Objekt ist, an einem Kreuzungspunkt der Zeitscheiben des Fahrzeugs und des Objekts, falls vorhanden, und
die Wahrscheinlichkeit der Kollision gleich dem Produkt der Wahrscheinlichkeit ist, dass das Fahrzeug und das Objekt in dem Moment den Kreuzungspunkt passieren.

5. Verfahren nach Anspruch 4, wobei die Schritte a) bis d) und a2) bis d2) für eine Folge von Momenten nach dem betrachteten Moment umgesetzt werden, wobei das Verfahren ferner die folgenden Schritte umfasst:
f) für einen Kurs und ein kinematisches Profil, die für das Fahrzeug angestrebt werden, oder unter allen für das Fahrzeug angestrebten Kollisionen, Bestimmen des wahrscheinlichen Punktes der Kollision (I), für den die Wahrscheinlichkeit der Kollision maximal ist,
g) Bestimmen des Kurses (TBX) und des damit verbundenen kinematischen Profils für das mobile Objekt, als "Vermeidung" bezeichnet, die ermöglichen, dass das mobile Objekt die Kollision vollständig vermeidet, indem ein zuvor festgelegter Grenzwert erreicht wird, der als "Vorunfall" bezeichnet wird, und
h) Umsetzen eines Vergleichs zur Bestimmung, ob der Kurs und das kinematische Profil der Vermeidung ein für das mobile Objekt vorbestimmtes Annehmbarkeitskriterium erfüllen oder nicht.

6. Computerprogramm, umfassend Anweisungen zur Ausführung der Schritte des Verfahrens nach einem der Ansprüche 1 bis 5, wenn das Programm durch einen Computer ausgeführt wird.

7. Aufzeichnungsmedium, das durch einen Computer lesbar ist, auf dem ein Computerprogramm abgespeichert ist, das Anweisungen für die Ausführung der Schritte des Verfahrens nach einem der Ansprüche 1 bis 5 umfasst.

8. Unterstützungssystem (30) für ein Straßenfahrzeug (12), umfassend eine Vorrichtung (34-36-40) zur Identifizierung und zur Lokalisierung von mobilen Objekten (B, C), die dazu geeignet ist, ein mobiles Objekt in Bezug auf das Fahrzeug zu identifizieren und zumindest eine Position (Xi) desselben in Bezug auf das Fahrzeug zu schätzen, wobei das System **dadurch gekennzeichnet ist, dass** es ferner eine Berechnungseinheit (40) umfasst, die dazu geeignet ist, das Verfahren nach einem der Ansprüche 1 bis 5 zu realisieren.

9. Unterstützungssystem (30) nach Anspruch 8, wobei zum Bestimmen der Referenzkurse und/oder der kinematischen Referenzprofile die Berechnungseinheit dazu geeignet ist, eine Tangential- und/oder Winkelbeschleunigung des mobilen Objekts und/oder des Fahrzeugs, die abhängig von der Zeit variiert, zu berücksichtigen.

10. Unterstützungssystem nach Anspruch 8 oder 9, wobei die Berechnungseinheit dazu geeignet ist, die Referenzkurse für das Fahrzeug und/oder das Objekt zu bestimmen, indem ein geometrisches Modell der Fahrbahn, auf der sich das Fahrzeug befindet, berücksichtigt wird.

11. Unterstützungssystem nach Anspruch 10, wobei die Berechnungseinheit dazu geeignet ist, das geometrische Modell der Kreuzung zumindest ab einem Kurs eines Fahrzeugs, das die Kreuzung bereits überquert hat, festzulegen.

12. Unterstützungssystem nach Anspruch 10 oder 11, wobei die Berechnungseinheit dazu geeignet ist, das geometrische Modell der Kreuzung ab einem Modell vom Kreuzungstyp, das in einem Speicher der Einheit gespeichert ist, festzulegen.

13. Unterstützungssystem (30) nach einem der Ansprüche 8 bis 12, wobei die Wahrscheinlichkeiten der Referenzkurse und/oder der kinematischen Referenzprofile zumindest von einem zuvor festgelegten Wert, der in einem Speicher der Berechnungseinheit gespeichert ist, abhängig sind, und der gespeicherte Wert ein Wert der Tangential- und/oder Querbeschleunigung und/oder der Variation der Gierrate ist, insbesondere repräsentativ für gewöhnliche oder bevorzugte Verhaltensmuster des Fahrzeugs oder von mobilen Objekten.

14. Straßenfahrzeug (A), umfassend ein Unterstützungssystem nach einem der Ansprüche 8 bis 13.

## Claims

1. A method of determining information relating to a path envisaged for a road vehicle (A), the method comprising a step a):
a) determining at least two possible paths for the vehicle, referred to as reference paths (A--,A-,A+,A++);
the method being **characterized by** further comprising the following steps:
b) determining a reference dynamic profile, for the course of each of the reference paths;
c) determining a vehicle time slice (CA) corresponding to an instant (t0+kΔt), by interpolating points reached at that instant on said reference paths, as traveled in accordance with their respective reference dynamic profiles, a vehicle time slice being all of the points that might be reached by the vehicle at an instant (t0+kΔt) under consideration; and
e) by means of said time slice, determining information relating to the envisaged path as a function of the reference paths, the envisaged path being an intermediate path lying between the reference paths.

2. A method according to claim 1, wherein, in step e), said information is determined as a function of the position of at least one point of the intermediate path relative to the reference paths.

3. A method according to claim 1 or 2, further comprising a step d):
d) determining a probability (PA) of the vehicle passing via a point of the vehicle time slice as a function of the position of said point on the vehicle time slice.

4. A method according to claim 3, further comprising the following steps:
a2) for a body (B) moving relative to the vehicle, determining at least two body reference paths (B--,B-,B+,B++);
b2) for the course of each of the body reference paths, determining a reference dynamic profile;
c2) determining a body time slice (CB) corresponding to said instant (t0+kΔt), by interpolating points reached at that instant on said body reference paths as traveled in accordance with their respective dynamic profiles;
d2) determining a probability (PB) for the body to pass via a point of the body time slice as a function of the position of said point on the body time slice; and wherein also
in step e), said information is a probability of collision between the vehicle and the body at a point of intersection between the time slices of the vehicle and of the body, if such a point exists; and
said probability of collision is equal to the product of the probabilities for the vehicle and for the object to pass at said collision point at said instant.

5. A method according to claim 4, wherein steps a) to d) and a2) to d2) are performed for a sequence of instants later than the instant under consideration, the method further comprising the following steps:
f) for a path and a dynamic profile envisaged for the vehicle, or from among all of the collisions envisaged for the vehicle, determining a probable collision point (I) for which the probability of collision is a maximum;
g) determining the so-called "avoidance" path (TBX) and the associated avoidance dynamic profile, for said mobile body, that enable the moving body to avoid the collision while reaching a predetermined so-called "pre-accident" limit value; and
h) performing a comparison to determine whether the avoidance path and dynamic profile satisfy or not a predetermined acceptability criterion for the moving body.

6. A computer program including instructions for executing the steps of the method according to any one of claims 1 to 5 when said program is executed by a computer.

7. A computer readable recording medium having recorded thereon a computer program including instructions for executing the steps of the method according to any one of claims 1 to 5.

8. An assistance system (30) for a road vehicle, the system comprising a device (34-36-40) for identifying and locating moving bodies (B,C), suitable for identifying a body moving relative to the vehicle and for estimating at least one position (Xi) thereof relative to the vehicle,
the system being **characterized by** further comprising a calculation unit (40) suitable for implementing the method according to any one of claims 1 to 5.

9. An assistance system (30) according to claim 8, wherein, in order to determine the reference paths and/or the reference dynamic profiles, the calculation unit is suitable for taking account of a time-varying tangential and/or angular acceleration of the moving body and/or of the vehicle.

10. An assistance system according to claim 8 or 9, wherein the calculation unit is suitable for determining reference trajectories for the vehicle and for the body by taking account of a geometrical model of the roadway on which the vehicle is located.

11. An assistance system according to claim 10, wherein the calculation unit is suitable for establishing the geometrical model of the intersection from at least one path of a vehicle that has already passed through said intersection.

12. An assistance system according to claim 10 or 11, wherein the calculation unit is suitable for establishing a geometrical model of the intersection from a standard intersection model recorded in a memory of the unit.

13. An assistance system according to any one of claims 8 to 12, wherein the probabilities of the reference paths and/or of the reference dynamic profiles are a function of at least one predetermined value stored in a memory of the calculation unit, and said recorded value is a tangential and/or transverse acceleration value, and/or a value of yaw rate variation, in particular a value representative of usual or preferable behaviors of the vehicle or of moving bodies.

14. A road vehicle (A) including an assistance system according to any one of claims 8 to 13.
